# EUROPEAN PATENT SPECIFICATION

(11) **EP 1 477 459 B1**
(45) Date of publication and mention of the grant of the patent: **22.02.2012**
(21) Application number: 03029119.9
(22) Date of filing: 18.12.2003
(51) Int. Cl.: C02F 1/48, H01F 7/02

(54) **Wartertight envelope containing a premanent magnet**
Wasserdichte Hülle enthaltend einen Permanentmagneten
Enveloppe imperméable contenant un aimant permanent

(30) Priority: 12.05.2003 IT mi20030226
(43) Date of publication of application: 17.11.2004
(73) Proprietor: Kydostars S.r.l., 21100 Varese (IT)
(72) Inventor: Scapinello, Marino, 21040 Carnago (Varese) (IT)
(74) Representative: Lecce, Giovanni

(56) References cited:
- EP-A- 0 646 548
- DE-A- 4 018 526
- US-A- 5 288 401
- US-A- 6 012 308
- Raab: "Raab Vitalfood", , 1 January 2010 (2010-01-01), Retrieved from the Internet: URL:http://www.raabvitalfood.de/pdf/englis ch_web.pdf [retrieved on 2011-01-05]

## Description

The present invention refers to a watertight envelope containing a permanent magnet, as defined in claim 1.

More particularly, the present invention refers to said watertight envelope containing a permanent magnet, particularly but not exclusively suitable to be used to magnetize water for washing or food or drink preparation.

From the scientific literature, it is known that the natural magnetic action is widely applied in the therapeutic field, in water treatment and in the technical field.

In particular, the presence of complex magnetic fields in moving water, added with salts or washing cleansers develops three specific and measurable phenomena, such as:
fostering the cleanser activation even at low temperatures due to the effect of the electrical pickups at molecular level and/or for galvanic effects;
determining the forming of geometry crystals, i.e. aggregating crystals, for example from calcium aragonite crystals and not calcite ones due to the magnetic axis orientation of all the components in water, preventing the deposits of precipitates; so that, in its turn, water with a lower quantities of residuals, i.e. with a magnetically lowered hardness, requires a lower quantity of cleanser;
allowing the complete removal during rinsing due to the reduction of precipitates and to the formation of geometry crystals.

It is furthermore known that also processes taking place in the human body are beneficially affected by magnetism. In fact, for example, the magnetic energy affects the circulatory system up to the capillary vessels where the exchanges between blood and tissues take place supporting and fostering the vital processes of metabolism, in order to assure a higher oxygen intake able to stimulate the metabolism of tissues increasing the permeability of the capillary membranes. In order to exploit these advantageous and beneficial features of magnetized water, it has been proposed to use permanent magnets placed in appropriate envelopes to magnetize water used for washing and for food or drink preparation, such as for example those marketed under the tradename KydoS by FI MA STARS SRL of Azzate (VA), Italy.

The use of permanent magnets placed into envelopes of the prior art, even though appreciated, is not free from drawbacks; in fact as permanent magnets are placed in humid environments or are immersed into liquids, they are subject to oxidation with subsequent pollution due to the oxide thus formed. This pollution is particularly undesired in case of washing as it settles on tissues and It is not tolerated in case of food or drink preparation.

GB 2 076 677 relates to a magnetic stirrer for liquids, comprising a vessel, an associated drive magnet rotating outside and below said vessel, and a stirring element interacting with the rotating magnet, said stirring element being located on the bottom of the vessel and comprising a permanent magnet sealed in a disc-shaped body portion with open-ended passageways for improving the mixing action.

WO - A - 0060717 relates to a permanently encapsulated magnet assembly to be used in magnetically-driven applications such as a pump impeller driven by a rotating magnet and comprising a non-metallic housing and a magnet disposed in an annular chamber.

The Depliant "Raab Vitalfood", 1, January 2010 illustrates the Oekomag magnetic ball, i.e. a generally spherical container provided with two large openings defining a channel through which water flows and two co-operating permanent magnets embedded in the ball so as to generate a magnetic field at the centre of the ball.

Therefore, subject of the present invention is to provide a watertight envelope containing a permanent magnet being able to remove the above-mentioned drawbacks in connection with the prior art.

According to the present invention this and other purposes will be clearer from the following description and are achieved by a watertight envelope containing a permanent magnet according to claim 1.

The manufacturing and functional features of the watertight envelope containing a permanent magnet of the present invention will be better understood from the following description, wherein reference is made to the figures of the attached drawing representing an embodiment given only by way of illustrative and non-limitative example, wherein:

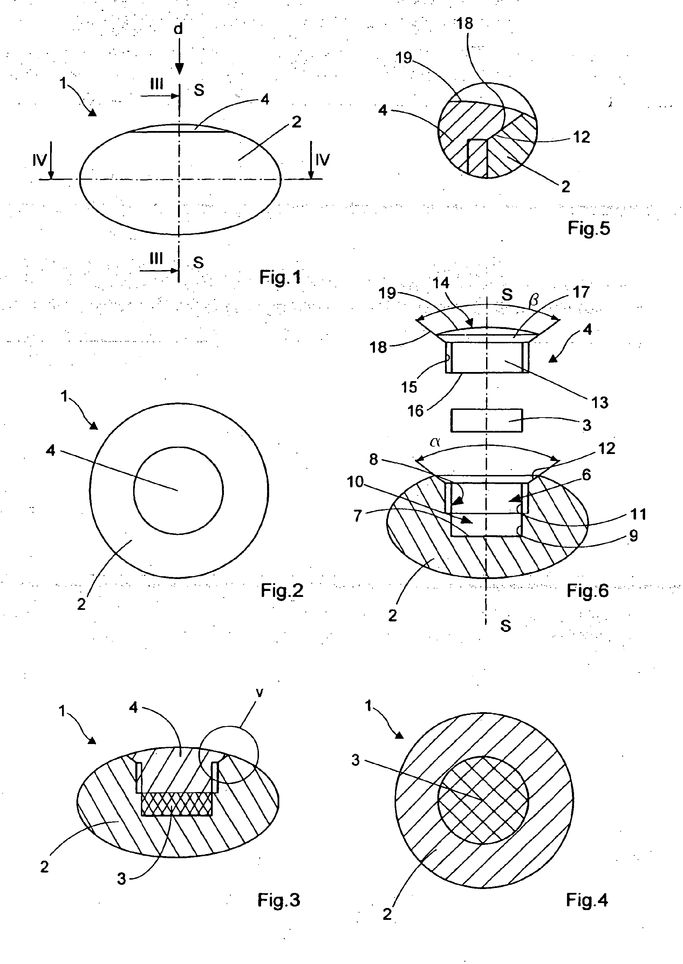

- Figure 1 is a schematic front view of the watertight envelope containing a permanent magnet of the present invention;
- Figure 2 is the schematic view according to the direction d of Figure 1 of the watertight envelope containing a permanent magnet of Figure 1;
- Figure 3 is a schematic section view according to the line III-III of Figure 1;
- Figure 4 is a schematic section view according to the line IV-IV of Figure 1;
- Figure 5 is an enlarged schematic view of the detail marked with V in Figure 3; and
- Figure 6 is a schematic view with detached parts of the watertight envelope containing a permanent magnet of Figure 1;
- Figure 7 is a schematic front view of the watertight envelope containing a permanent magnet of the present invention according to an alternative embodiment;
- Figure 8 is a longitudinal section schematic view of the same watertight envelope of Figure 7.

With reference to the attached Figures, the watertight envelope containing a permanent magnet of the present invention, marked in its whole with 1, comprises an envelope body 2 of any shape and size, at least a permanent magnet 3 of any shape and size and a plug 4.

According to an embodiment, the envelope body 2 is disc-shaped and has an s-s axial symmetry axis placed in the direction of lower thickness of said envelope body 2 and it is provided with a blind hole 6 whose axis corresponds with the s-s axial symmetry axis. The blind hole 6 has a flat bottom surface 7 and a side surface 8. The side surface 8 has a first portion 9 forming a seat 10 with the flat bottom surface 7 and a second threaded portion 11. Between the side surface 8 of the blind hole 6 and the external one, the envelope body 2 has a truncated conical surface 12. The depth of the blind hole 6 substantially allows placing the seat 10 in the middle of the size of the envelope body 2 along the s-s axis.

According to an embodiment, the permanent magnet 3 is preferably cylindrical-shaped and delimited by flat walls.

According to an embodiment, the plug 4 is cylindrical-shaped and has a body 13 and a head 14. The side surface of the body 13 of the plug 4 is provided with a thread 15 and is delimited by a flat surface 16 at the end opposite to the head 14. The head 14 has a projecting edge 17 compared to the side surface. From the side of the body 13, the edge 17 is delimited by a truncated conical surface 18. The external surface 19 of the head 14 is preferably convex and advantageously uninterrupted with the external surface of the envelope body 2 when the plug 4 is assembled.

The envelope body 2 and the plug 4 are advantageously made of non-toxic plastic material such as polyethylene for food use; and the plug 4 is preferably transparent.

According to an embodiment, the taper of the truncated conical surface 12 of the envelope body 2 is slightly lower than the one of the truncated conical surface 18 of the plug 4. The truncated conical surface 12 advantageously has an angular width α of 120 degrees while the truncated conical surface 18 has an angular width β of 126 degrees.

The watertight envelope containing a permanent magnet of the present invention is assembled placing the permanent magnet 3 in advance into the seat 10 of the envelope body 2 and screwing the thread 15 of the plug 4 in the thread 11 of the envelope body 2 until the truncated conical surface 18 of the plug 4 abuts on the truncated conical surface 12 of the envelope body 2. As the tapers of the truncated conical surfaces 12 and 18 are slightly different, at first the contact takes place along a line which, in the example shown, is next to the edge of said truncated conical surfaces 12 and 18 respectively far from the threads 11 and 15; in other words along a line next to the relevant external surfaces. Once the tightening of the plug 4 is completed, this contact expands for elastic deformation of the material until it completely affects said surfaces 12 and 18, in order to assure the watertight or seal of the watertight envelope 1.

The watertight obtained between the truncated conical surfaces 12 and 18 has revealed to be extremely advantageous as it allowed avoiding the use of intermediate seal elements such as o-rings or seals and the seats thereof.

The watertight between the truncated conical surfaces 12 and 18 can advantageously assure the watertight also in temperature as it can absorb possible differentiated thermal expansions.

Even though the watertight envelope 1 can have very different sizes and shapes, it advantageously has a diameter comprised between 40 and 60 mm, preferably between 48 and 50 mm and a transversal size, or thickness along the s-s axis comprised between 24 and 44 mm, preferably 34 mm; while the permanent magnet 3 has, preferably but not necessarily, a diameter of 28 mm and a thickness of 10 mm.

The watertight envelope containing a permanent magnet 1 of the present invention is used immersed into the washing fluid or into the water used for food or drink preparation so that the magnetic field produced by the permanent magnet 1 can carry out its action.

In use, the watertight envelope containing a permanent magnet 1 has revealed to be completely free from oxide leaks or pouring.

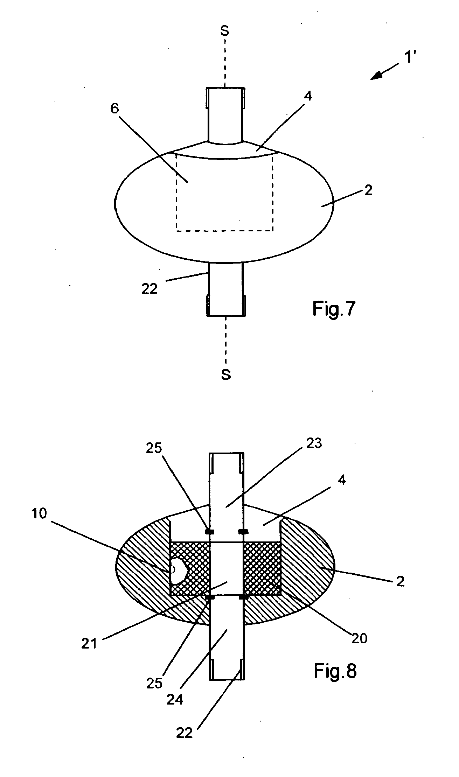

Figures 7 and 8 refer to an embodiment variant of the watertight envelope containing a permanent magnet of the present invention; in said Figures the same reference numbers as the ones of the previously described embodiment are used as to parts and/or common components.

According to this alternative solution, the watertight envelope of the present invention, marked in its whole with 1', comprises the disc-shaped envelope body 2 and the plug 4 that are similar to the previous embodiment, as well as the blind hole 6 wherein the permanent magnet is housed. The latter, marked with 20, is cylindrical-shaped and is delimited by flat walls and it is provided with a central pass-through hole 21 developed along the S-S vertical axis of the envelope body 2. In said hole a tubular body or small tube 22, preferably made of stainless steel whose opposite ends project both in the upper and in the lower parts along the mentioned vertical axis from the envelope body 2, is advantageously placed. For the purpose, both the envelope body 2 and the plug 4 are provided with an opening or hole, respectively marked with 23 and 24 for the passage of the small tube 22. The pass-through hole 23 of the plug is aligned along the S-S axis while the hole 24 of the envelope body 2 develops from the base of the seat 10 defined by the blind hole 6 of which it forms the extension with a considerably lower diameter. The hole 24 is also aligned along the S-S axis of the envelope body 2. The external diameter of the small tube 22 is preferably comprised between 12 and 16 mm, while the internal one is comprised between 5 and 9 mm. One or both of the opposite upper and lower ends of the small tube 22 projecting from the plug 4 and the envelope body 2, are at least partly threaded to be connected to an apparatus or a water duct, generally a tap or a flexible tube of a tub or shower. The fixed constraint of the small tube 22 in relation with the permanent magnet 20 and with the envelope body 2, if necessary, is fastened by one or more O-Ring seals or seeger spring rings, marked with 25; the small tube 22, for the purpose, is provided with one or more miters, obtained in such a position to scratch and match the upper base and/or the lower one of the permanent magnet 20 after the insertion in the hole 21 of the latter of the same small tube. The plug 4, from the upper end of which an at least partly threaded end of the small tube 22 projects, is also complementarily threaded along the pass-through hole 23; said hole can alternatively have a higher diameter than the thread of the end of the cited small tube, so that the latter cannot be screwed in it. In this case, the presence of an O-Ring seal 25 placed on the same small tube at least near the upper base of the magnet 20 is required in order to prevent the contact between the water and the magnet and cause oxidation phenomena.

According to the above-mentioned embodiment variant, the watertight envelope containing a permanent magnet can be advantageously and steadily placed in correspondence with a tap outlet of any kind with a possible connection known in itself, i.e. along the flexible tube of a tub or shower or sink.

The water supplied by the network crosses the small tube 22 and is submitted to the permanent magnet 20 influence that carries out its action, in a similar way as described for the first embodiment of the invention.

As it can be noticed from the previous description, the watertight envelope containing a permanent magnet of the present invention revealed to be particularly functional and flexible and it can be also easily manufactured, thus allowing to achieve the aim and overcome the drawbacks mentioned with reference to the prior art.

Even though the present invention has been described and illustrated according to an embodiment that is given only by way of non-limitative example, people skilled in the art can make changes and variants according to the above-mentioned description.

## Claims

1. A watertight envelope containing at least a permanent magnet (3), comprising:
- an envelope body (2) having a disc shape with an axial symmetry axis (s-s) placed in the direction of lower thickness of said body, provided with a blind hole (6) whose axis corresponds with said axial symmetry axis (s-s) with a seat (10), a threaded portion (11) and a truncated conical surface (12), at least a permanent magnet being housed in said seat (10),
- a cylindrical-shaped plug (4) having a body (13) and a convex head (14) wherein the side surface of the body (13) has a thread (15) and is delimited by a flat surface (16) at the end opposite to the head (14) and wherein the head has a projecting edge (17) compared to the side surface, said edge (17) being delimited by a truncated conical surface (18) such that the external surface of said envelope body (2) is uninterrupted when said plug (4) is assembled , said truncated conical surface (12) of the envelope body (2) showing a taper which is slightly lower than the one of said truncated conical surface (18) of the plug (4), said seat (10) being placed in the middle of the size of the envelope body 2 along the axial symmetry axis (s-s) of said envelope body (2).

2. The envelope as claimed in claim 1, wherein the truncated conical surface (12) of the envelope body (2) shows an angular width a of 120 degrees and the truncated conical surface (18) of the plug (4) shows an angular width p of 126 degrees.

3. The envelope as claimed in claim 1 or 2, wherein said permanent magnet (3) is cylindrical-shaped and delimited by flat walls.

4. The envelope as claimed in claims 1 to 3, wherein said envelope body (2) and plug (4) are made of non-toxic plastic material such as polyethylene for food use.

5. The envelope as claimed in claim 1 wherein said plug (4) is transparent and has a diameter comprised between 40 and 60 mm, preferably between 48 and 50 mm and a transversal size along said axis (s-s) comprised between 24 and 44 mm, preferably 34 mm.

6. The envelope as claimed in claim 1, wherein said permanent magnet (3) has a diameter of 28 mm and a thickness of 10 mm.

## Patentansprüche

1. Eine wasserdichte Hülle mit mindestens einem Permanentmagneten (3), bestehend aus:
- einem scheibenförmigen Hüllkörper (2) mit einer axialen Symmetrieachse (s-s) in Richtung der geringeren Dicke des besagten Körpers, der mit einem Sackloch (6) versehen ist, dessen Achse der axialen Symmetrieachse (s-s) entspricht, mit einem Sitz (10), einem Gewindeabschnitt (11) und einer kegelstumpfförmigen Oberfläche (12), wobei mindestens ein Permanentmagnet in dem besagten Sitz (10) untergebracht ist,
- einem zylinderförmigem Stopfen (4) mit einem Körper (13) und einem konvexen oberen Teil (14), wobei die Seitenfläche des Körpers (13) ein Gewinde (15) aufweist und durch eine ebene Fläche (16) an dem Ende gegenüber von dem oberen Teil (14) begrenzt ist und wobei der obere Teil eine im Vergleich zu der Seitenfläche vorstehende Kante (17) hat, wobei die besagte Kante (17) durch eine abgeschnittene konische Fläche (18) begrenzt ist, so dass die Außenfläche des Hüllkörpers (2) nicht unterbrochen ist, wenn der besagte Stopfen (4) zusammengesetzt ist, wobei die besagte kegelstumpfförmige Oberfläche (12) des Hüllkörpers (2) eine Verjüngung aufweist, die etwas tiefer ist als die der kegelstumpfförmigen Oberfläche (18) des Stopfens (4) ist, wobei der besagte Sitz (10) in der Mitte in der Größe des Hüllkörpers (2) entlang der axialen Symmetrieachse (s-s) des besagten Hüllkörpers (2) platziert ist.

2. Die Hülle nach Anspruch 1, wobei die kegelstumpfförmige Oberfläche (12) des Hüllkörpers (2) eine Winkelbreite a von 120 Grad und die kegelstumpfförmige Oberfläche (18) des Stopfens (4) eine Winkelbreite p von 126 Grad aufweist.

3. Die Hülle nach Anspruch 1 oder 2, wobei der besagte Permanentmagnet (3) zylinderförmig ist und durch flache Wände begrenzt ist.

4. Die Hülle nach den Ansprüchen 1 bis 3, wobei der besagte Hüllkörper (2) und der Stopfen (4) aus nicht toxischem Kunststoff wie Polyethylen zur Verwendung im Lebensmittelbereich hergestellt sind.

5. Die Hülle nach Anspruch 1, wobei der besagte Stopfen (4) durchsichtig ist und einen Durchmesser zwischen 40 und 60 mm, vorzugsweise zwischen 48 und 50 mm, und eine Querschnittgröße entlang der besagten Achse (s-s) zwischen 24 und 44 mm, vorzugsweise 34 mm, aufweist.

6. Die Hülle nach Anspruch 1, wobei der besagte Permanentmagnet (3) einen Durchmesser von 28 mm und eine Dicke von 10 mm hat.

## Revendications

1. Une enveloppe étanche à l'eau contenant au moins un aimant permanent (3), comprenant:
- un corps de l'enveloppe (2) ayant une forme de disque avec un axe de symétrie axiale (s-s) placé dans le sens de l'épaisseur plus faible dudit corps, muni d'un trou borgne (6) dont l'axe correspond avec ledit axe de symétrie axiale (SS) avec un siège (10), une partie filetée (11) et une surface conique tronquée (12), au moins un aimant permanent étant logé dans ledit siège (10),
- un bouchon de forme cylindrique (4) comportant un corps (13) et une tête convexe (14) dans lequel la surface côté du corps (13) a un filetage (15) et est délimité par une surface plane (16) à l'extrémité opposée à la tête (14) et où la tête a un bord saillant (17) par rapport à la surface latérale, ledit bord (17) étant délimité par une surface conique tronquée (18) de telle sorte que la surface extérieure dudit corps de l'enveloppe (2) est ininterrompue lorsque ledit bouchon (4) est monté, ladite surface conique tronquée (12) du corps de l'enveloppe (2) montrant un cône qui est légèrement inférieur à celui de ladite surface conique tronquée (18) du bouchon (4), ledit siège (10) étant placé au milieu de la taille du corps de l'enveloppe (2) le long de l'axe de symétrie axiale (s-s) dudit corps de l'enveloppe (2).

2. L'enveloppe selon la revendication 1, dans laquelle la surface conique tronquée (12) du corps de l'enveloppe (2) montre une largeur angulaire A de 120 degrés et la surface conique tronquée (18) du bouchon (4) montre une largeur angulaire P de 126 degrés.

3. L'enveloppe selon la revendication 1 ou 2, dans laquelle ledit aimant permanent (3) est de forme cylindrique et est délimité par des parois plates.

4. L'enveloppe selon les revendications 1 à 3, dans lesquelles ledit corps de l'enveloppe (2) et le bouchon (4) sont faits de matériaux non toxiques en plastique comme le polyéthylène à usage alimentaire.

5. L'enveloppe selon la revendication 1, dans laquelle ledit bouchon (4) est transparent et a un diamètre compris entre 40 et 60 mm, de préférence entre 48 et 50 mm et une dimension transversale le long dudit axe (s-s) comprise entre 24 et 44 mm, de préférence 34 mm.

6. L'enveloppe selon la revendication 1, dans laquelle ledit aimant permanent (3) a un diamètre de 28 mm et une épaisseur de 10 mm.
